# EUROPEAN PATENT APPLICATION

(11) **EP 4 358 038 A1**
(43) Date of publication of application: **24.04.2024**
(21) Application number: 22202084.4
(22) Date of filing: 18.10.2022
(51) Int. Cl.: G06V 20/58

(54) **METHOD FOR RECOGNIZING AN OBJECT IN THE SURROUNDINGS OF A VEHICLE, METHOD FOR CONTROLLING A VEHICLE, VEHICLE, OBJECT RECOGNITION SYSTEM, DATA PROCESSING APPARATUSES, COMPUTER PROGRAMS, AND COMPUTER-READABLE STORAGE MEDIA**

(71) Applicant: Volvo Car Corporation, 405 31 Göteborg (SE)
(72) Inventor: PEREZ BARRERA, Oswaldo, 405 31 Göteborg (SE); LENNARTSSON, Anders, 405 31 Göteborg (SE)
(74) Representative: Maiwald GmbH

(57) **Abstract**

The disclosure relates to method for recognizing an object (38) in the surroundings of a vehicle (10). The method comprises capturing at least one image (I0) of the surroundings. Subsequently, a first object recognition procedure is performed and a first object information request (IR1) is provided to a central control unit (40), if the object recognition procedure returns a recognition result and an associated confidence information being inferior to a predefined confidence threshold. Moreover, the method comprises receiving at least one additional image (I1, I2, I3) from the central control unit (40) and performing a second object recognition procedure based thereon. The disclosure also relates to a method for controlling a vehicle (10), comprising performing the above method for recognizing an object (38). Furthermore, a corresponding data processing apparatus (14), computer program (24), and computer-readable storage medium (22) are described. Also a vehicle (10) having such a data processing apparatus (14) is presented. Additionally, a method for providing an object information (OI) to a vehicle (10), a corresponding data processing apparatus (42), computer program (50), and computer-readable storage medium (48) are disclosed. Moreover, an object recognition system (58) is explained.

## Description

The present disclosure relates to a method for recognizing an object in the surroundings of a vehicle having at least one camera unit.

Additionally, the present disclosure relates to a method for controlling a vehicle.

Moreover, the present disclosure is directed to a corresponding data processing apparatus, computer program, and computer-readable storage medium.

The present disclosure is further directed to a vehicle comprising such a data processing apparatus.

Furthermore, the present disclosure relates to a method for providing an object information to a vehicle having at least one camera unit.

The present disclosure also is directed to a corresponding data processing apparatus, computer program, and computer-readable storage medium.

The present disclosure is further directed to an object recognition system.

The use of computer vision for recognizing objects in the surroundings of a vehicle is known from vehicles being able to drive in an at least partially autonomous manner. In this field of application, it is important to reliably recognize objects being represented in captured images in order to be able to react appropriately.

For the present disclosure, recognizing an object has to be distinguished over simply detecting an object. Detecting an object means that a method or an apparatus, especially a data processing apparatus or computer system, is able to generate data indicating that a representation of an object is present in a captured image. Recognizing an object means that the method or the apparatus, especially the data processing apparatus or computer system, is able to generate data indicating that an object is represented in a captured image and additionally describing which type of an object it is, e.g. another vehicle, a cyclist, a road barrier, a tree, a building, etc.

It is an objective of the present disclosure to further improve the recognition of objects in the surroundings of vehicles.

The problem is at least partially solved or alleviated by the subject matter of the independent claims of the present disclosure, wherein further examples are incorporated in the dependent claims.

According to a first aspect, there is provided a method for recognizing an object in the surroundings of a vehicle having at least one camera unit, comprising:
- capturing at least one image of the surroundings using the camera unit, wherein the at least one captured image comprises a representation of the object,
- detecting the representation of the object within the at least one captured image and determining an object position estimate based on the at least one captured image,
- performing a first object recognition procedure based on the at least one captured image and providing a first object information request to a central control unit, if the object recognition procedure returns a recognition result and an associated confidence information being inferior to a predefined confidence threshold, wherein the object information request comprises the object position estimate and a request for at least one additional image of the surroundings of the vehicle comprising the position being described by the object position estimate, and
- receiving at least one additional image from the central control unit and performing a second object recognition procedure based on the at least one captured image and the at least one additional image.

Thus, when using the method, it is determined that an object is represented in the at least one captured image. Moreover, a first object recognition procedure is performed. This means that an effort is made to recognize the object in the captured image, i.e. to determine the type of the object being represented in the captured image. The first object recognition procedure returns a recognition result, i.e. a result describing the type of the object, and a confidence information, i.e. a result describing the confidence or reliability of the recognition result. In a case in which the confidence information relates to a high confidence recognition result, i.e. in a case in which the confidence information equals or exceeds the predefined confidence threshold, the reliability of the recognition has been high. In a case in which the confidence information relates to a low confidence recognition result, i.e. if the confidence information is inferior to the predefined confidence threshold, the reliability of the recognition has been poor. In a case in which the confidence is below the predefined confidence threshold, the object may be considered not to be recognized. In the latter case, additional images potentially showing the same object are requested and received from a central control unit. This has the effect that a second object recognition procedure may be performed which is based on the at least one captured image and the at least one additional image. In simplified words, the basis for performing the second object recognition procedure has been improved as compared to the basis for performing the first object recognition procedure. Consequently, a recognition result with higher confidence or reliability may be produced. Altogether, the reliability of object recognition is improved by the present method. This is especially the case if the method is performed on a vehicle that is in an uncommon relative position with respect to the object to be recognized.

In the present method, the object position estimate may be determined based on the at least one captured image since a position of the camera unit is known. Thus, an orientation of the field of detection of the camera unit is known. Based on a size of the representation of the object in the captured image, a distance between the object and the camera unit may be determined.

The method for recognizing an object in the surroundings of a vehicle having at least one camera unit may be executed on a vehicle, especially a fully or partially autonomous vehicle.

The basic idea underlying the present disclosure is to request help of a central control unit when trying to recognize an object but being unable to recognize this object with a sufficient level of confidence or reliability. The central control unit is in a position to provide additional images showing the object. Consequently, the object recognition can be based additionally on images being provided by the central control unit. Overall, the reliability of object recognition is improved.

The captured image may be a standing or moving image.

It is noted that for performing the first object recognition procedure and the second object recognition procedure, a database with images of a plurality of objects is provided. For each of the plurality of objects, a set of images having been taken from different angles is provided. Preferably, the set of images being provided for each object, shows the object from all sides. Such images may be called 360° images. When performing the first or second object recognition procedure, the at least one captured image or both the at least one captured image and the at least one additional image are compared to images provided by the database. The database may be provided on the entity running the above method, e.g. on the vehicle, or on the central control unit. In the latter case the central control unit is communicatively connected to the entity performing the object recognition procedure.

In an example, the method further comprises:
- providing a second object information request to the central control unit, if the second object recognition procedure based on the at least one captured image and the at least one received image returns a recognition result and an associated confidence information being inferior to the predefined confidence threshold, wherein the second object information request comprises the object position estimate and a request for at least one additional image of the surroundings comprising the position being described by the object position estimate,
- receiving at least one additional image from the central control unit and performing a third object recognition procedure based on the at least one captured image, the at least one additional image received in response to the first object information request and the at least one additional image received in response to the second object information request.

Thus, additional object information requests may be provided to the central control unit. The number of object information requests is not limited in principle. In doing so, additional images potentially showing the object to be recognized are received, thereby improving the basis for a third or further object recognition procedure. The sequence of providing an object information request and receiving at least one additional image may be repeated until a sufficient confidence level of object recognition is achieved. Consequently, a reliable object recognition is guaranteed.

In an example, the first object information request and/or the second object information request comprises a vehicle location information describing a location of the vehicle. Thus, additionally the location from which the captured image has been captured is provided. Based thereon, an effort can be made to provide additional images from positions differing by at least a predefined distance and/or at least a predefined angle. The vehicle location information may be provided by a GPS system. It may comprise at least one of GPS coordinates, a lane information, and a travelling direction.

According to a second aspect, there is provided a method for controlling a vehicle, comprising:
- performing the method for recognizing an object in the surroundings of the vehicle according to the present disclosure, and
- triggering a driving maneuver based on the recognized object.

Consequently, an adequate driving maneuver can be triggered with high reliability. This is due to the fact that the object in the surroundings of the vehicle is recognized with high reliability.

The driving manoeuver may be an evasive manoeuver and/or a braking manoeuver.

The method for controlling a vehicle may be executed on a vehicle, especially a fully or partially autonomous vehicle.

The method for controlling a vehicle may form part of a method for operating the vehicle in a fully or partially autonomous manner.

It is noted that the above method for recognizing an object in the surroundings of a vehicle and the above method for controlling a vehicle relies on the use of optical cameras only. This means that neither a radar unit nor a lidar unit is used. A system for detecting and recognizing objects in the surroundings of the vehicle and a system for controlling the vehicle are thus comparatively simple. Still, it is able to recognize objects with high reliability as has been mentioned above.

According to a third aspect, there is provided a data processing apparatus comprising means for carrying out at least one of the above methods of the present disclosure. Thus, the means are able to carry out at least one of the method for recognizing an object in the surroundings of a vehicle having at least one camera unit and the method for controlling a vehicle. Consequently, objects may be recognized with high reliability and, based thereon, an adequate driving maneuver can be triggered with high reliability.

According to a fourth aspect, there is provided a computer program comprising instructions which, when the computer program is executed by a computer, cause the computer to carry out at least one of the above methods of the present disclosure. Thus, the instructions relate to at least one of the method for recognizing an object in the surroundings of a vehicle having at least one camera unit and the method for controlling a vehicle such that the computer can be caused to carry out at least one of the method for recognizing an object in the surroundings of a vehicle having at least one camera unit and the method for controlling a vehicle. Consequently, objects may be recognized with high reliability and, based thereon, an adequate driving maneuver can be triggered with high reliability.

According to a fifth aspect, there is provided a computer-readable storage medium comprising instructions which, when executed by a computer, cause the computer to carry out at least one of the above methods of the present disclosure. Thus, the instructions relate to at least one of the method for recognizing an object in the surroundings of a vehicle having at least one camera unit and the method for controlling a vehicle such that the computer can be caused to carry out at least one of the method for recognizing an object in the surroundings of a vehicle having at least one camera unit and the method for controlling a vehicle. Consequently, objects may be recognized with high reliability and, based thereon, an adequate driving maneuver can be triggered with high reliability.

According to a sixth aspect, there is provided a vehicle comprising a data processing apparatus according to the present disclosure. Thus, the data processing apparatus comprises means for carrying out at least one of the above methods of the present disclosure, i.e. the means are able to carry out at least one of the method for recognizing an object in the surroundings of a vehicle having at least one camera unit and the method for controlling a vehicle. Consequently, objects may be recognized with high reliability and, based thereon, an adequate driving maneuver of the vehicle can be triggered with high reliability.

According to a seventh aspect, there is provided a method for providing an object information to a vehicle having at least one camera unit, comprising:
- receiving at least a first object information request from the vehicle, wherein the first object information request comprises an object position estimate and a request for at least one additional image of the surroundings of the vehicle comprising the position being described by the object position estimate, and
- providing at least one additional image of the surroundings of the vehicle comprising the position being described by the object position estimate to the vehicle.

Thus, upon request, at least one image of the surroundings of the vehicle may be provided to the vehicle. This puts the vehicle in a position to be able to recognize objects in its surroundings with increased reliability. Based thereon, a highly adequate driving maneuver can be triggered.

The method for providing an object information to a vehicle having at least one camera unit may be executed on a central control unit, e.g. a cloud computing unit or a server.

In an example, providing at least one additional image to the vehicle comprises pulling the at least one additional image from a central database. This, of course, implies that on the central database such an additional image is available. Such an image can be provided in a quick and simple manner.

In an example, providing the at least one image comprises triggering an observer vehicle to capture at least one additional image of the surroundings comprising the position being described by the object position estimate, and receiving the additional image from the observer vehicle. Consequently, the camera units of other vehicles are used in order to provide additional images. Triggering an observer vehicle may comprise broadcasting an observation request which can be received by an observer vehicle in the form of a pull notification or directly providing the observation request to one or more specific observer vehicles in the form of a push notification. The observer vehicles may be selected according to their respective location and/or orientation. Observer vehicles need to be close to the location of the object and/or approaching this location.

According to an eighth aspect, there is provided a data processing apparatus comprising means for carrying out the method for providing an object information to a vehicle having at least one camera unit according to the present disclosure. Consequently, a vehicle may be put in a position to be able to recognize objects in its surroundings with increased reliability and trigger highly adequate driving maneuvers based thereon.

According to a ninth aspect, there is provided a computer program comprising instructions which, when the computer program is executed by a computer, cause the computer to carry out the method for providing an object information to a vehicle having at least one camera unit according to the present disclosure. Consequently, a vehicle may be put in a position to be able to recognize objects in its surroundings with increased reliability and trigger highly adequate driving maneuvers based thereon.

According to a tenth aspect, there is provided a computer-readable storage medium comprising instructions which, when executed by a computer, cause the computer to carry out the method for providing an object information to a vehicle having at least one camera unit according to the present disclosure. Consequently, a vehicle may be put in a position to be able to recognize objects in its surroundings with increased reliability and trigger highly adequate driving maneuvers based thereon.

According to an eleventh aspect, there is provided an object recognition system comprising a data processing apparatus according to the present disclosure comprising means for carrying out at least one of the method for recognizing an object in the surroundings of a vehicle having at least one camera unit according to the present disclosure and the method for controlling a vehicle according to the present disclosure. Moreover, the object recognition system comprises a data processing apparatus comprising means for carrying out the method for providing an object information to a vehicle having at least one camera unit according to the present disclosure. The data processing apparatus comprising means for carrying out at least one of the method for recognizing an object in the surroundings of a vehicle having at least one camera unit according to the present disclosure and the method for controlling a vehicle according to the present disclosure and the data processing apparatus comprising means for carrying out the method for providing an object information to a vehicle having at least one camera unit according to the present disclosure are communicatively connected. Thus, the object recognition system comprises a data processing apparatus being located in a vehicle and a data processing apparatus being located in a central control unit. These two data processing apparatuses are communicatively connected such that additional images potentially showing an object being present in the surroundings of the vehicle can be provided to the data processing apparatus being located in the vehicle. Thereby, the reliability of object recognition of the vehicle is increased. Based thereon, highly adequate driving maneuvers of the vehicle may be triggered.

The methods of the present disclosure may be at least partly computer-implemented, and may be implemented in software or in hardware, or in software and hardware. Further, the methods may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

It should be noted that the above examples may be combined with each other irrespective of the aspect involved.

These and other aspects of the present disclosure will become apparent from and elucidated with reference to the examples described hereinafter.

Examples of the disclosure will be described in the following with reference to the drawings.

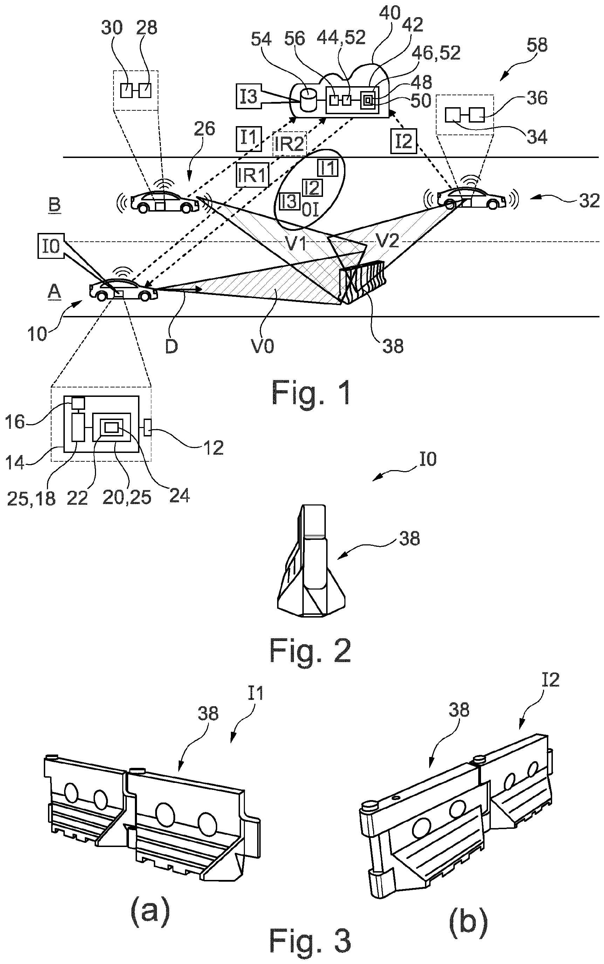

- Figure 1: shows a first traffic situation comprising an object recognition system according to the present disclosure, a vehicle according to the present disclosure, wherein the vehicle comprises a data processing apparatus, a computer-readable medium and a computer program according to the present disclosure and wherein the vehicle is configured to execute a method for controlling vehicle according to the present disclosure and a method for recognizing an object in the surroundings of a vehicle according to the present disclosure, and a central control unit comprising another data processing apparatus, another computer-readable storage medium and another computer program according to the present disclosure, wherein a method for providing an object information to a vehicle according to the present disclosure may be performed by the central control unit,
- Figure 2: shows an image having been captured by the vehicle,
- Figure 3: shows two images having been captured by a first observer vehicle and a second observer vehicle respectively,

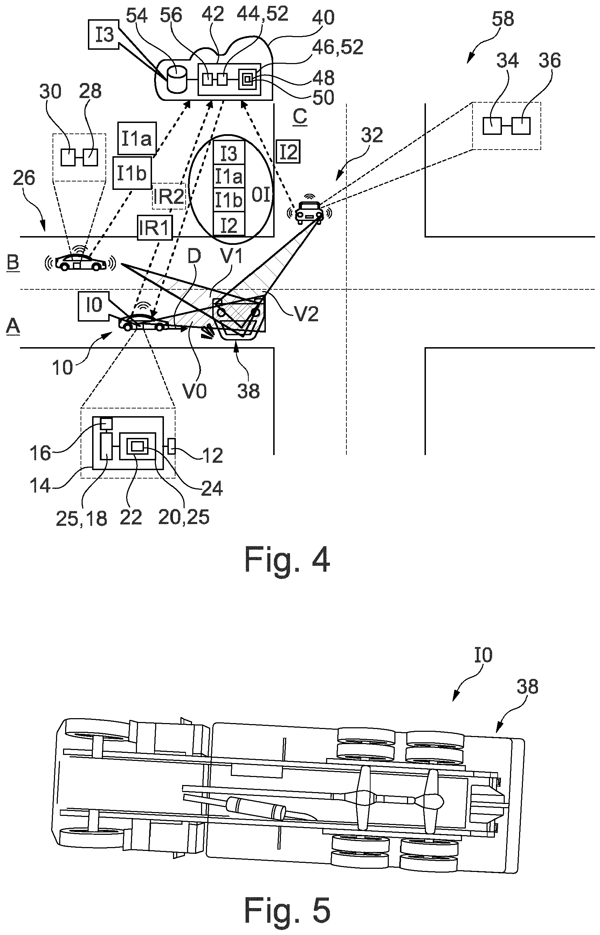

- Figure 4: shows a second traffic situation comprising an object recognition system according to the present disclosure, a vehicle according to the present disclosure, wherein the vehicle comprises a data processing apparatus, a computer-readable medium and a computer program according to the present disclosure and wherein the vehicle is configured to execute a method for controlling vehicle according to the present disclosure and a method for recognizing an object in the surroundings of a vehicle according to the present disclosure, and a central control unit comprising another data processing apparatus, another computer-readable storage medium and another computer program according to the present disclosure, wherein a method for providing an object information to a vehicle according to the present disclosure may be performed by the central control unit,
- Figure 5: shows an image having been captured by the vehicle, and
- Figure 6: shows three images, wherein two thereof have been captured by a first observer vehicle and one thereof has been captured by a second observer vehicle.

The figures are merely schematic representations and serve only to illustrate examples of the disclosure. Identical or equivalent elements are in principle provided with the same reference signs.

Figure 1 shows a traffic situation comprising a vehicle 10 traveling in a direction D on a lane A.

The vehicle 10 comprises a camera unit 12 having a field V0 of detection and a data processing apparatus 14.

The camera unit 12 and the data processing apparatus 14 are communicatively connected.

Furthermore, the data processing apparatus 14 comprises a wireless communication device 16.

Moreover, the data processing apparatus 14 comprises a data processing unit 18 and a data storage unit 20.

The data storage unit 20 comprises a computer readable storage medium 22 on which a computer program 24 is stored.

The computer program 24 and, thus, also the computer readable storage medium 22 comprise instruction which, when executed by the data processing unit 18 or, more generally, a computer, cause the data processing unit 18 or the computer to carry out a method for controlling the vehicle 10.

Consequently, the data processing unit 18 and the data storage unit 20 may be designated as means 25 for carrying out the method for controlling the vehicle 10.

This method will be explained in detail further below.

Besides the vehicle 10, the first traffic situation also comprises a first observer vehicle 26 comprising a camera unit 28 and a wireless communication device 30. The camera unit 28 and the wireless communication device 30 are communicatively connected.

The camera unit 28 has a field V1 of detection.

Moreover, the first traffic situation comprises a second observer vehicle 32 comprising a camera unit 34 and a wireless communication device 36. The camera unit 34 and the wireless communication device 36 are communicatively connected.

The camera unit 34 has a field V2 of detection.

The first observer vehicle 26 and the second observer vehicle 32 are traveling in the same direction D as the vehicle 10. However, the first observer vehicle 26 and the second observer vehicle 32 are traveling on a lane B which runs in parallel to lane A.

An object 38 is located on lane A. Along the traveling direction D, the object 38 is positioned in front of the vehicle 10.

The object 38 presents an obstacle for the vehicle 10.

Since the object 38 is not located on lane B, it does not present an obstacle for the first observer vehicle 26 and the second observer vehicle 32.

With respect to the traveling direction D, the object 38 is positioned in front of the first observer vehicle 26 and in the back of the second observer vehicle 32.

Beyond that, the first traffic situation comprises a central control unit 40.

The central control unit comprises a data processing apparatus 42.

The data processing apparatus 42 comprises a data processing unit 44 and a data storage unit 46.

The data storage unit 46 comprises a computer readable storage medium 48 on which a computer program 50 is stored.

The computer program 50 and the computer readable storage medium 48 comprise instructions which, when executed by the data processing unit 44 or, more generally, a computer, cause the data processing unit 44 or the computer to carry out a method for providing an object information OI to a vehicle having at least one camera unit.

Consequently, the data processing unit 44 and the data storage unit 46 may also be designated as means 52 for carrying out a method for providing an object information OI to a vehicle having at least one camera unit.

The method for providing an object information OI to a vehicle having at least one camera unit will be explained in detail further below.

Furthermore, the central control unit 48 comprises a central database 54 being communicatively connected to the data processing apparatus 42.

Additionally, the data processing apparatus 42 of the central control unit 48 comprises a wireless communication device 56.

The data processing apparatus 14 of the vehicle 10 and the data processing apparatus 42 of the central control unit 14 together form an object recognition system 58.

In the first traffic situation as shown in Figure 1, also the camera unit 28 and the wireless communication device 30 of the first observer vehicle 26 and the camera unit 34 and the wireless communication device 36 of the second observer vehicle 32 form part of the object recognition system 58.

The data processing apparatus 14 of the vehicle 10 and the data processing apparatus 42 of the central control unit 14 are communicatively connected via the respective wireless communication devices 16, 56.

The camera unit 28 of the first observer vehicle 26 is also communicatively connected to the data processing apparatus 42 of the central control unit 40 via the wireless communication device 30 of the first observer vehicle 26 and the wireless communication device 56 of the data processing apparatus 42 of the central control unit 40.

The camera unit 34 of the second observer vehicle 32 is additionally communicatively connected to the data processing apparatus 42 of the central control unit 40 via the wireless communication device 36 of the second observer vehicle 32 and the wireless communication device 56 of the data processing apparatus 42 of the central control unit 40.

As has already been mentioned above, the data processing apparatus 14 of the vehicle 10 may execute a method for controlling the vehicle 10.

In a first step S11 of this method, a method for recognizing an object in the surroundings of the vehicle 10 is performed.

In a second step S12 of this method, a driving maneuver is triggered based on the recognized object.

In more detail, performing the method for recognizing an object in the surroundings of the vehicle 10 comprises capturing at least one image 10 of the surroundings using the camera unit 12 of the vehicle 10. This constitutes a step S111.

In the example of Figure 1, the camera unit 12 comprises a front camera.

The captured image 10 comprises a representation of the object 38. The captured image 10 is shown in Figure 2.

In a step S112, the object 38 is detected within the captured image 10. This means that the data processing apparatus 14 is running an object detection procedure on the captured image 10. As a result of the object detection procedure, it is determined that the object 38 is shown in the image 10. It has to be noted that at this stage of the method, it has only been detected that an object 38 is represented in the image 10. A type of the object 38 is not known yet.

Since the position of the camera unit 12 on the vehicle 10 is known, an object position estimate may be determined based on the captured image 10 and the known position of the camera unit 12 of the vehicle 10. The object position estimate describes a position of the object 38.

In the following step S113, a first object recognition procedure is performed based on the at least one captured image 10.

To this end, a known object recognition procedure may be used. Applying the object recognition procedure may comprise comparing the captured image 10 to images being stored on the data storage unit 20 and/or on the data storage unit 46.

The object recognition procedure provides a recognition result which describes a type of the object 38. Moreover, the object recognition procedure provides a confidence information describing a confidence of the object recognition. In the present example, it is assumed that using the object recognition procedure returns that the type of the object 38 is a road barrier. However, the confidence information relates to a very low confidence only.

This is easily understandable by having a look at Figure 2. The side of the road barrier being shown in the image 10 strongly resembles a pylon.

In other words, the confidence information is inferior to a predefined confidence threshold. Consequently, a first object information request IR1 is provided to the central control unit 40, more precisely to the data processing apparatus 42 in a step S114.

The first object information request IR1 is transmitted using the wireless communication device 16 of the data processing apparatus 14 of the vehicle 10 and the wireless communication device 56 of the data processing apparatus 42 of the central control unit 40.

The object information request IR1 comprises the object position estimate, a vehicle location information describing a location of the vehicle 10 and a request for at least one additional image I1, I2, I3 of the surroundings of the vehicle 10. Of course, the position being described by the object position estimate shall be shown in the additional image.

Now the method for providing an object information OI to a vehicle having at least one camera unit is started on the data processing apparatus 42. In the following, the steps of the method for providing an object information OI will be designated with reference signs S2x in order to distinguish these steps over to steps of the method for controlling the vehicle 10 and the method for recognizing an object in the surroundings of the vehicle 10.

In a first step S21, the first object information request IR1 from the vehicle 10 is received at the data processing apparatus 42.

In the present example, in a second step S22, a total of three additional image I1, I2, I3 of the surroundings of the vehicle 10 comprising the position being described by the object position estimate are provided to the vehicle 10.

Additional image 11 is provided by triggering the first observer vehicle 26, more precisely the camera unit 28 of the first observer vehicle 26 to capture the additional image I1.

The image 11 is received at the data processing apparatus 42 of the central control unit 40.

In the present example, the first observer vehicle 26 is triggered to capture the additional image 11 since a location of the first observer vehicle 26 is known and it is determined that this location is sufficiently close to the estimated position of the object 38.

Being sufficiently close means that the object 38 is possibly in the field V1 of detection of the camera unit 28 of the first observer vehicle 26.

Image 11 is shown in figure 3 (a).

The additional image 12 is provided by triggering the second observer vehicle 32, more precisely the camera unit 34 of the second observer vehicle 32 to capture the additional image 12.

The image 12 is received at the data processing apparatus 42 of the central control unit 40.

In the present example, the second observer vehicle 32 is triggered to capture the additional image 12 since a location of the second observer vehicle 32 is known and it is determined that this location is sufficiently close to the estimated position of the object 38. Again, being sufficiently close means that the object 38 is possibly in the field V2 of detection of the camera unit 34 of the second observer vehicle 32. In the present example, the camera unit 34 is facing backwards.

Image 13 is shown in figure 3(b).

The third additional image 13 is pulled from the central database 54.

The images of the central database 54 are at least annotated with one position being shown in the image such that images can be retrieved from the central database 54 which show the surroundings of the vehicle 10 being within a predefined distance from the position estimate of the object 38.

As a consequence of step S22 of the method for providing an object information OI to a vehicle having at least one camera unit, the images I1, I2, I3 are received from the central control unit 40 at the data processing apparatus 14. This constitutes a step S115 of the method for recognizing an object in the surroundings of the vehicle 10.

In a step S116, a second object recognition procedure is performed. The second object recognition procedure is based on the captured image 10 and the additional images I1, 12,13.

Again, he object recognition procedure provides a recognition result which describes a type of the object 38. Moreover, the object recognition procedure provides a confidence information describing a confidence of the object recognition. In the present example, it is assumed that using the second object recognition procedure returns that the type of the object 38 is a road barrier. In contrast to the first object recognition procedure, the confidence information relates to a very high confidence.

Consequently, in step S12, an evasive manoeuver may be triggered. This means that the vehicle 10 changes the lane in order to circumvent object 38. Since the object 38 has been recognized with high reliability, the driving maneuver may be determined with high reliability, too.

In a case in which the confidence information resulting from the second object recognition procedure still is insufficient, i.e. is still inferior to the confidence threshold, a second object information request IR2 may be provided to the central control unit 40. Then, the central control unit 40 will, once again, provide additional images which will be received at the data processing apparatus 14. Subsequently, a third object recognition procedure may be performed based on these images.

If still, the confidence information resulting from the third object recognition procedure is insufficient, the above steps may be repeated until the object 38 may be recognized with a sufficient confidence.

A second traffic situation is shown in Figure 4.

In the following, only the differences with respect to the first traffic situation as shown in Figure 1 will be explained. The same or corresponding elements will be designated with the same reference signs.

The traffic situation of Figure 4 comprises a street crossing.

As before, the vehicle 10 is traveling on a lane A into direction D and the first observer vehicle 26 is traveling on a lane B into the same direction as the vehicle 10.

However, in contrast to the traffic situation of Figure 1, the second observer vehicle 32 now travels on a lane C which is oriented perpendicular to lanes A and B.

Moreover, the camera unit 34 of the second observer vehicle 32 now is a front facing camera. The second observer vehicle 32 is approaching the crossing and the object 38.

The object 38 is now an overturned truck.

Figure 5 shows the image 10 having been captured by the vehicle 10.

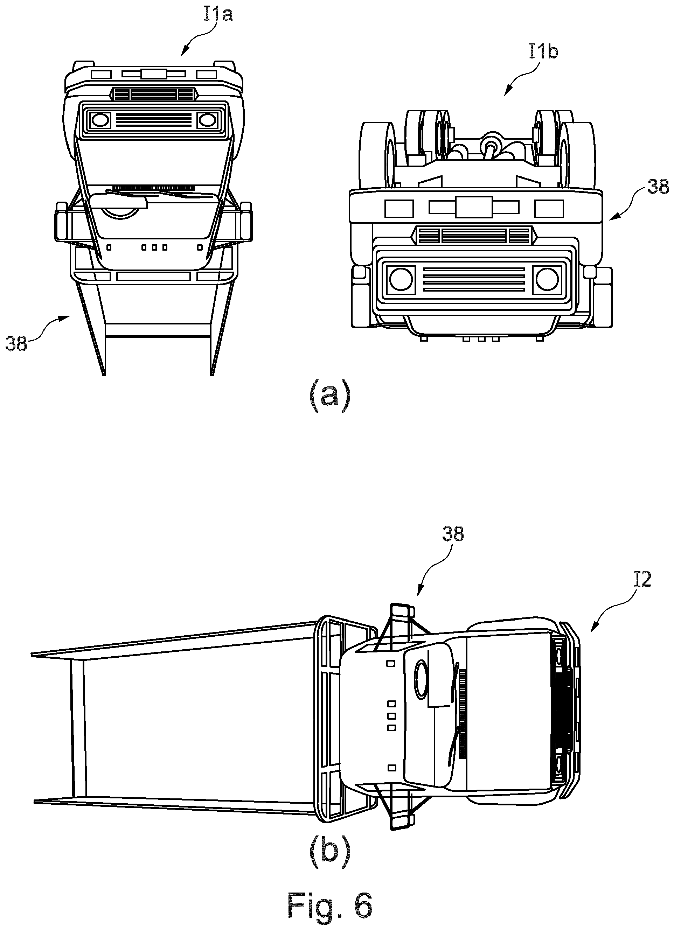

Figure 6(a) shows two pictures I1a and I1b which have been captured by the first observer vehicle 26.

Figure 6(b) shows an image 12 having been captured by the second observer vehicle 32.

As far as the details of the vehicle 10, the first observer vehicle 26 and the second observer vehicle 32 are concerned, reference is made to the above explanations.

Moreover, the central control unit 40 is the same as in the traffic situation of Figure 1.

As far as the performance of the method for controlling the vehicle 10, the method for recognizing an object in the surroundings of the vehicle 10 and the method for providing an object information OI to a vehicle having at least one camera unit are concerned, reference is also made to the above explanations.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: camera unit
- 14: data processing apparatus
- 16: wireless communication device of the data processing apparatus of the vehicle
- 18: data processing unit
- 20: data storage unit
- 22: computer-readable storage medium
- 24: computer program
- 25: means for carrying out the method for controlling the vehicle 10
- 26: first observer vehicle
- 28: camera unit of the first observer vehicle
- 30: wireless communication device of the first observer vehicle
- 32: second observer vehicle
- 34: camera unit of the second observer vehicle
- 36: wireless communication device of the second observer vehicle
- 38: object
- 40: central control unit
- 42: data processing apparatus
- 44: data processing unit
- 46: data storage unit
- 48: computer readable storage medium
- 50: computer program
- 52: means for carrying out a method for providing an object information to a vehicle having at least one camera unit
- 54: central database
- 56: wireless communication device of the data processing apparatus of the central control unit
- 58: object recognition system

- A: lane on which the vehicle 10 is travelling
- B: lane on which the first observer vehicle 26 and the second observer vehicle 32 are travelling
- C: lane on which the second observer vehicle 32 is travelling
- D: travelling direction of vehicle 10
- 10: image captured by the camera unit of the vehicle
- 11: additional image captured by the camera unit of the first observer vehicle
- I1a: additional image captured by the camera unit of the first observer vehicle
- I1b: additional image captured by the camera unit of the first observer vehicle
- 12: additional image captured by the camera unit of the second observer vehicle
- 13: additional image pulled from the central database
- IR1: first object information request
- IR2: second object information request
- OI: object information
- S11: first step of the method for controlling a vehicle
- S111: first step of the method for recognizing an object in the surroundings of a vehicle
- S112: second step of the method for recognizing an object in the surroundings of a vehicle
- S113: third step of the method for recognizing an object in the surroundings of a vehicle
- S114: fourth step of the method for recognizing an object in the surroundings of a vehicle
- S115: fifth step of the method for recognizing an object in the surroundings of a vehicle
- S116: sixth step of the method for recognizing an object in the surroundings of a vehicle
- S12: second step of the method for controlling a vehicle
- S21: first step of the method for providing an object information to a vehicle
- S22: second step of the method for providing an object information to a vehicle
- V0: field of detection of camera unit 12
- V1: field of detection of camera unit 28
- V2: field of detection of camera unit 34

## Claims

1. A method for recognizing an object (38) in the surroundings of a vehicle (10) having at least one camera unit (12), comprising:
- capturing at least one image (10) of the surroundings using the camera unit (12), wherein the at least one captured image (10) comprises a representation of the object (38) (S111),
- detecting the representation of the object (38) within the at least one captured image (10) and determining an object position estimate based on the at least one captured image (10) (S112),
- performing a first object recognition procedure based on the at least one captured image (I0) (S113) and providing a first object information request (IR1) to a central control unit (40), if the object recognition procedure returns a recognition result and an associated confidence information being inferior to a predefined confidence threshold, wherein the object information request (IR1) comprises the object position estimate and a request for at least one additional image (I1, I1a, I1b, I2, I3) of the surroundings of the vehicle (10) comprising the position being described by the object position estimate (S114), and
- receiving at least one additional image (11, I1a, I1b, I2, I3) from the central control unit (40) and performing a second object recognition procedure based on the at least one captured image (10) and the at least one additional image (11, I1a, I1b, I2, I3).

2. The method of claim 1, further comprising
- providing a second object information request (IR2) to the central control unit (40), if the second object recognition procedure based on the at least one captured image (10) and the at least one received image (11, I1a, I1b, I2, I3) returns a recognition result and an associated confidence information being inferior to the predefined confidence threshold, wherein the second object information request (IR2) comprises the object position estimate and a request for at least one additional image of the surroundings comprising the position being described by the object position estimate,
- receiving at least one additional image from the central control unit (40) (S115) and performing a third object recognition procedure based on the at least one captured image (10), the at least one additional image (11, I1a, I1b, I2, I3) received in response to the first object information request (IR) and the at least one additional image received in response to the second object information request (IR2) (S116).

3. The method of claim 1 or 2, wherein the first object information request (IR1) and/or the second object information request (IR2) comprises a vehicle location information describing a location of the vehicle (10).

4. A method for controlling a vehicle (10), comprising:
- performing the method for recognizing an object (38) in the surroundings of the vehicle (10) according to any one of the preceding claims (S11), and
- triggering a driving maneuver based on the recognized object (38) (S12).

5. A data processing apparatus (14) comprising means (25) for carrying out at least one of the methods of any one of the preceding claims.

6. A computer program (24) comprising instructions which, when the computer program (24) is executed by a computer, cause the computer to carry out at least one of the methods of claims 1 to 4.

7. A computer-readable storage medium (22) comprising instructions which, when executed by a computer, cause the computer to carry out at least one of the methods of claims 1 to 4.

8. A vehicle (10) comprising a data processing apparatus (14) of claim 5.

9. A method for providing an object information (OI) to a vehicle (10) having at least one camera unit (12), comprising:
- receiving at least a first object information request (IR1) from the vehicle (10), wherein the first object information request (IR1) comprises an object position estimate and a request for at least one additional image (I1, I1a, I1b, 12, 13) of the surroundings of the vehicle (10) comprising the position being described by the object position estimate (S21), and
- providing at least one additional image (I1, I1a, I1b, I2, I3) of the surroundings of the vehicle (10) comprising the position being described by the object position estimate to the vehicle (10) (S22).

10. The method of claim 9, wherein providing at least one additional image (I1, I1a, I1b, 12, 13) to the vehicle (10) comprises pulling the at least one additional image (13) from a central database (54).

11. The method of claim 9 or 10, wherein providing the at least one image (I1, I1a, I1b, I2, 13) comprises triggering an observer vehicle (26, 32) to capture at least one additional image (I1, I1a, I1b, I2) of the surroundings comprising the position being described by the object position estimate, and receiving the additional image (I1, I1a, I1b, I2) from the observer vehicle (26, 32).

12. A data processing apparatus (42) comprising means (52) for carrying out the method of claims 9 to 11.

13. A computer program (50) comprising instructions which, when the computer program (50) is executed by a computer, cause the computer to carry out the method of claims 9 to 11.

14. A computer-readable storage medium (48) comprising instructions which, when executed by a computer, cause the computer to carry out the method of claims 9 to 11.

15. An object recognition system (58) comprising a data processing apparatus (14) according to claim 5 and a data processing apparatus (42) according to claim 12, wherein the data processing apparatus (14) according to claim 5 and the data processing apparatus (58) according to claim 12 are communicatively connected.

## Amended claims

### Amended claims in accordance with Rule 137(2) EPC.

1. A method for recognizing an object (38) in the surroundings of a vehicle (10) having at least one camera unit (12), comprising:
- capturing at least one image (I0) of the surroundings using the camera unit (12), wherein the at least one captured image (I0) comprises a representation of the object (38) (S111),
- detecting the representation of the object (38) within the at least one captured image (I0) and determining an object position estimate based on the at least one captured image (I0) (S112),
- performing a first object recognition procedure based on the at least one captured image (I0) (S113) and providing a first object information request (IR1) to a central control unit (40), if the object recognition procedure returns a recognition result and an associated confidence information being inferior to a predefined confidence threshold, wherein the object information request (IR1) comprises the object position estimate and a request for at least one additional image (I1, I1a, I1b, I2, I3) of the surroundings of the vehicle (10) comprising the position being described by the object position estimate (S114), and
- receiving at least one additional image (I1, I1a, I1b, I2, I3) from the central control unit (40) and performing a second object recognition procedure based on the at least one captured image (I0) and the at least one additional image (I1, I1a, I1b, I2, I3).

2. The method of claim 1, further comprising
- providing a second object information request (IR2) to the central control unit (40), if the second object recognition procedure based on the at least one captured image (I0) and the at least one received image (I1, I1a, I1b, I2, I3) returns a recognition result and an associated confidence information being inferior to the predefined confidence threshold, wherein the second object information request (IR2) comprises the object position estimate and a request for at least one additional image of the surroundings comprising the position being described by the object position estimate,
- receiving at least one additional image from the central control unit (40) (S115) and performing a third object recognition procedure based on the at least one captured image (I0), the at least one additional image (I1, I1a, I1b, I2, I3) received in response to the first object information request (IR) and the at least one additional image received in response to the second object information request (IR2) (S116).

3. The method of claim 1 or 2, wherein the first object information request (IR1) and/or the second object information request (IR2) comprises a vehicle location information describing a location of the vehicle (10).

4. A method for controlling a vehicle (10), comprising:
- performing the method for recognizing an object (38) in the surroundings of the vehicle (10) according to any one of the preceding claims (S11), and
- triggering a driving maneuver based on the recognized object (38) (S12).

5. A data processing apparatus (14) comprising means (25) for carrying out at least one of the methods of any one of the preceding claims.

6. A computer program (24) comprising instructions which, when the computer program (24) is executed by a computer, cause the computer to carry out at least one of the methods of claims 1 to 4.

7. A computer-readable storage medium (22) comprising instructions which, when executed by a computer, cause the computer to carry out at least one of the methods of claims 1 to 4.

8. A vehicle (10) comprising a data processing apparatus (14) of claim 5.

9. A method for providing an object information (OI) to a vehicle (10) having at least one camera unit (12), comprising:
- receiving at least a first object information request (IR1) from the vehicle (10), wherein the first object information request (IR1) comprises an object position estimate and a request for at least one additional image (I1, I1a, I1b, I2, I3) of the surroundings of the vehicle (10) comprising the position being described by the object position estimate (S21), and
- providing at least one additional image (I1, I1a, I1b, I2, I3) of the surroundings of the vehicle (10) comprising the position being described by the object position estimate to the vehicle (10) (S22),
wherein providing the at least one image (I1, I1a, I1b, I2, I3) comprises triggering an observer vehicle (26, 32) to capture at least one additional image (I1, I1a, I1b, I2) of the surroundings comprising the position being described by the object position estimate, and receiving the additional image (I1, I1a, I1b, I2) from the observer vehicle (26, 32).

10. A data processing apparatus (42) comprising means (52) for carrying out the method of claim 9.

11. A computer program (50) comprising instructions which, when the computer program (50) is executed by a computer, cause the computer to carry out the method of claim 9.

12. A computer-readable storage medium (48) comprising instructions which, when executed by a computer, cause the computer to carry out the method of claim 9.

13. An object recognition system (58) comprising a data processing apparatus (14) according to claim 5 and a data processing apparatus (42) according to claim 10, wherein the data processing apparatus (14) according to claim 5 and the data processing apparatus (58) according to claim 10 are communicatively connected.
